# EUROPEAN PATENT APPLICATION

(11) **EP 0 569 846 A2**
(43) Date of publication of application: **18.11.1993**
(21) Application number: 93107320.9
(22) Date of filing: 05.05.1993
(51) Int. Cl.: B29C 67/00, B29C 65/02, B29C 33/18, B32B 31/00, B32B 7/04

(54) **Apparatus for producing trim panels and method for securing such trim panels to a support**

(30) Priority: 13.05.1992 US 883024
(71) Applicant: R + S STANZTECHNIK GmbH, 63073 Offenbach (DE)
(72) Inventor: Spengler, Ernst Maximilian, W-6056 Heusenstamm 2 (DE); Spengler, Gerhard, W-6000 Frankfurt/M. 60 (DE)
(74) Representative: Schieferdecker, Lutz, Dipl.-Ing.

(57) **Abstract**

A trim panel, having a finish material cover layer (40b) bonded to a heat responsive backing material (40), for example, for covering the interior surface of a car door, is made in a molding apparatus in such a way that the contoured edges (42) of the molding tool form a finished panel rim around the trim panel simultaneously with the molding of the trim panel. The backing material (40) is, for example, a thermoplastic foam and/or a thermoplastic fleece material which is heated for the molding. The cover material (40b) for the finish cover layer is, for example, cloth that is cooled during the pressing, to avoid damage to the cover material. The finished rim is formed by shaping the surface layer material (40b) and simultaneously densifying the material of the backing material (40) at least along the edge of the panel without any need for folding the cover layer (40b) around the panel edges. The rim is then secured in a groove of a substrate, e.g. by an adhesive, by heat welding, or mechanically, e.g. by a location fit that is possible due to the rigidity of the rim.

## Description

### FIELD OF THE INVENTION

The invention relates to an apparatus for producing a trim panel having a heat responsive material backing covered on one surface by a cover layer, especially a decorative cover layer. The backing is a thermoplastic foam material. The invention also relates to a method for securing such trim panels to a support, substrate or wall.

### BACKGROUND INFORMATION

Our earlier U. S. Patent 4,923,539 (Spengler et al.) describes a method and apparatus for manufacturing trim panels, including at least one insert panel. Our earlier apparatus uses nesting dies, preferably in the lower mold section, for the formation of the insert panels. The nesting dies are independently movable of the mold sections. The known apparatus forms proper inserts in a door panel or the like. However, the earlier apparatus does not address the problem of forming finished panel rims, neither for the entire door panels nor for the inserts.

U. S. Patent 4,328,067 (Cesano) describes a laminating method and apparatus for producing trim panels, e.g. for an automobile door. Cesano illustrates the problem of obtaining a neat finished rim around a trim panel. The problem is solved by Cesano by leaving an ample margin of the cover material all around the backing, then slotting the margin even to the extent of cutting out gussets at corners to avoid creasing, and then folding the margin around the backing edge onto the back surface of the backing.

This method works, but has the drawback of being involved and creases cannot be fully avoided.

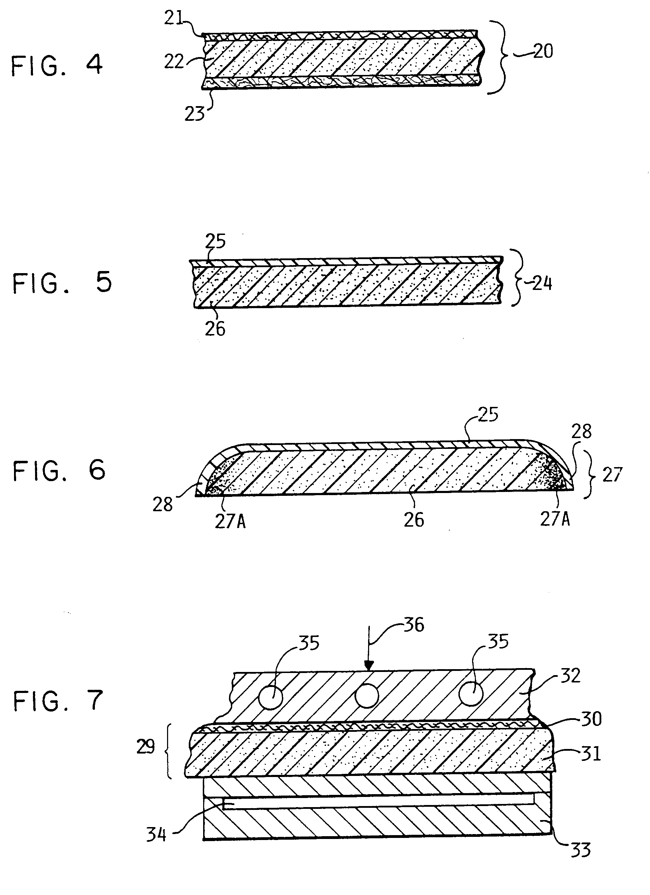

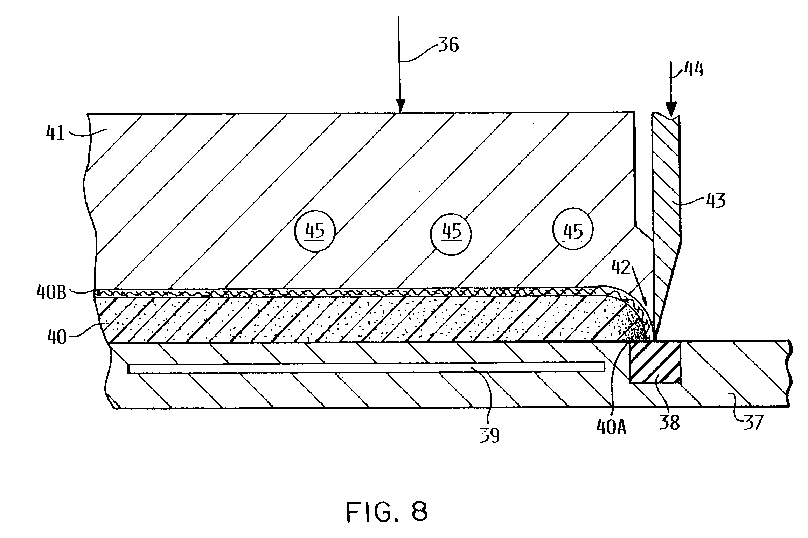

U. S. Patent 4,432,822 (Adams et al.) discloses manufacturing upholstery panels, e.g. car door trim panels. The problem of providing neat outer panel rims has been solved by cutting a cover layer and a backing larger than an intermediate foam layer, see Fig. 6 of Adams et al., and bonding the cover directly to the backing where the cover and backing overlap. A subsequent trimming cannot be avoided. In areas of the panels where different cover materials meet, the intermediate foam material is cut smaller, column 6, last three lines, and the cover material margins are tucked into a groove 20 in a substrate 22 in Fig. 8. This procedure is not quite satisfactory because it requires a temporary joining of the different cover sheets along their edges, e.g. by stitching, spot adhering, or the like, and because it is not assured that the tucked-in edges will permanently and neatly stay in the groove. Fraying is possible.

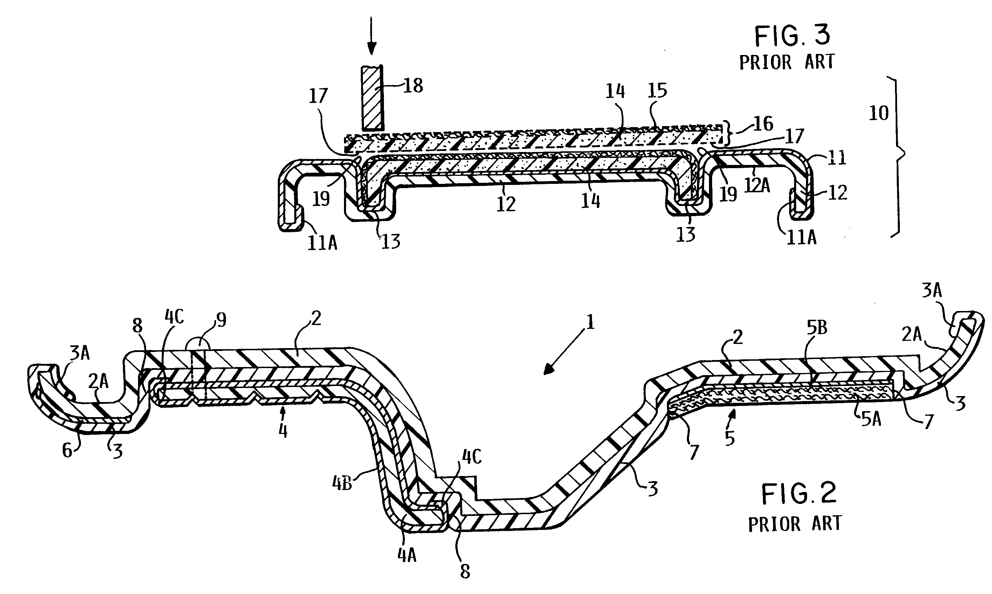

It is known from European Patent Publication EP 0,118,796 (Repper et al.) to tuck a margin of an insert panel into a groove of a substrate and secure the sheet material edges by an adhesive and/or by a weather stripping type of wedging member that clamps the sheet material into said groove. Fig. 3, to be described below, shows one conventional margin tuck with adhesive. The known securing method is time consuming and messy because it is hard to keep the adhesive away from areas where it is not supposed to get. Where a separate wedging member is used for the tucking, the quality of the junction along the transition area between two different materials depends on the continued effectiveness of the wedging member. Once one end or a portion of the wedging member comes loose, unravelling of the entire junction structure can easily occur. The known construction also requires a relatively large securing groove, since the wedging member must be of a certain size to be effective for its purpose. Besides, it is practically impossible to secure such a panel to a groove that is three-dimensionally contoured as opposed to a groove in a plane surface.

### OBJECTS OF THE INVENTION

In view of the foregoing, it is the aim of the invention to achieve the following objects singly or in combination;
to provide an apparatus, specifically a molding device for manufacturing trim panels with neat looking finished rims, whereby the apparatus avoids folding the cover layer around the edges and onto the back surface of a foam material backing or the like;
to provide an apparatus that can finish the edges of an entire panel and/or the edges of an insert panel fitting into an entire panel;
to provide a method for securing panels and/or trim panels with a holding fit in a groove without a separate wedging member, whereby the securing may be accomplished in various ways, e.g. with a wedging fit, with an adhesive, with heat applications such as ultrasound high frequency or ultrasound or friction welding or by conventional clips; and
to provide a method in which the rigidity of an insert foam is used for transmitting a molding pressure to produce a finished product, e.g. an entire car door in one operation.

### SUMMARY OF THE INVENTION

An apparatus of the invention is characterized by the following features. A first molding tool comprises a feature for keeping the temperature of a cover layer of a panel sufficiently low to avoid damaging the cover layer material. A second molding tool for cooperation with the first molding tool includes one or more heating elements for at least plastifying a heat responsive thermoplastic backing material sufficiently for deforming and molding the backing material under heat and pressure. One or the other molding tools has a curved contour for densifying and molding a margin zone of the trim panel or panel insert so that the backing material is plastified at least along the margin zone and shaped by the heating and compressing into a finished panel rim which has a higher density and hence a higher stiffness than the rest of the panel.

More specifically, the first molding tool and the second molding tool are sections that form a mold, whereby one of the tool sections has a mold cavity with an edge curving toward the other molding tool section for molding a panel margin into a finish densified panel rim. The molding tool section facing the finished cover layer is provided with cooling ducts and the molding tool section facing the thermoplastic backing, is provided with heating elements for heating the heat responsive or thermoplastic backing material, especially along the panel margin to plastify the backing material along the panel margin for densifying and shaping the heat responsive backing material with the cover layer bonded thereto into a finished panel rim so that the cover layer curves around the margin at least partly toward an opposite surface of the trim panel to form a finished densified panel rim without the need for back folding the cover layer all the way onto the back surface of the backing.

Trim panels formed by the present apparatus performing the method according to the invention are secured to a support such as a wall or a door panel substrate by first laminating at least two plies, including a decorative surface ply and a thermoplastic backing ply to each other to form a panel and then molding the margin of the panel into a contoured, densified, finished panel rim having a higher density than the rest of the panel and then securing the contoured densified finished panel rim into a groove of the support. Due to the higher density of the finished rim, it is now assured that soiling by an adhesive around the insert panel is avoided even if adhesive is used for the securing of the trim insert to the door panel. Also, other ways, e.g. heat welding are now more easily, yet more precisely done to the high density rim. The trim panel is securely held in place without any fraying of the panel rim.

### BRIEF DESCRIPTION OF THE DRAWINGS

In order that the invention may be clearly understood, it will now be described, by way of example, with reference to the accompanying drawings, wherein:
- Fig. 1: is a top plan view of a conventional passenger car door cover with two trim panels;
- Fig. 2: is a sectional view along section line 2 - 2 in Fig. 1 showing the attachment of the trim panels to a substrate forming together the door cover;
- Fig. 3: is a sectional view through a cover illustrating a conventional method of securing a trim panel;
- Fig. 4: shows in section a broken away portion of a trim panel material as used according to the invention;
- Fig. 5: is a view similar to that of Fig. 4, showing another trim panel material as used herein;
- Fig. 6: shows a section through the material shown in Fig. 5 after it has been formed or molded in an apparatus of the invention, for use as a trim panel with a finished rim;
- Fig. 7: shows in section a broken away portion of a molding apparatus according to the invention for forming materials as shown in Figs. 4 and 5;
- Fig. 8: shows a sectional view through a portion of a mold according to the invention for forming the trim panels shown in Fig. 6;
- Fig. 9: is a sectional, partly broken away view of a molding apparatus according to the invention with a nesting mold section, first and second mold sections, and tucking tools around the nesting mold section;
- Fig. 10: is a view similar to Fig. 5 to show that even trim panels with a complicated panel cross-section may be molded according to the invention;
- Figs. 11, 12, and 13: show partial sectional views of three trim panels with different sectional rim configurations molded according to the invention;
- Fig. 14: is a sectional view of a portion of a trim panel of the invention with yet another sectional finished rim configuration;
- Fig. 15: is a sectional view through a molding and trimming tool for securing a trim panel rim in a groove of a support or backing without an adhesive;
- Fig. 16: is a sectional view similar to that of Figs. 14 and 15, showing a preshaped curved panel rim in a narrow groove of a support or backing;
- Fig. 17: is a sectional view similar to that of Fig. 14 showing a different panel rim of three ply material;
- Fig. 18: shows a sectional view of a mold and trimming tool for trimming a panel as shown in Fig. 14;
- Fig. 19: is a sectional view through a door cover mold with upper and lower mold sections including two nesting mold sections surrounded by trimming or tucking tools; and
- Fig. 20: shows a modification of the method according to the present invention, wherein a fleece is separately preheated and a lamination of a foam and surface cover is

### DETAILED DESCRIPTION OF PREFERRED EXAMPLE EMBODIMENTS AND OF THE BEST MODE OF THE INVENTION

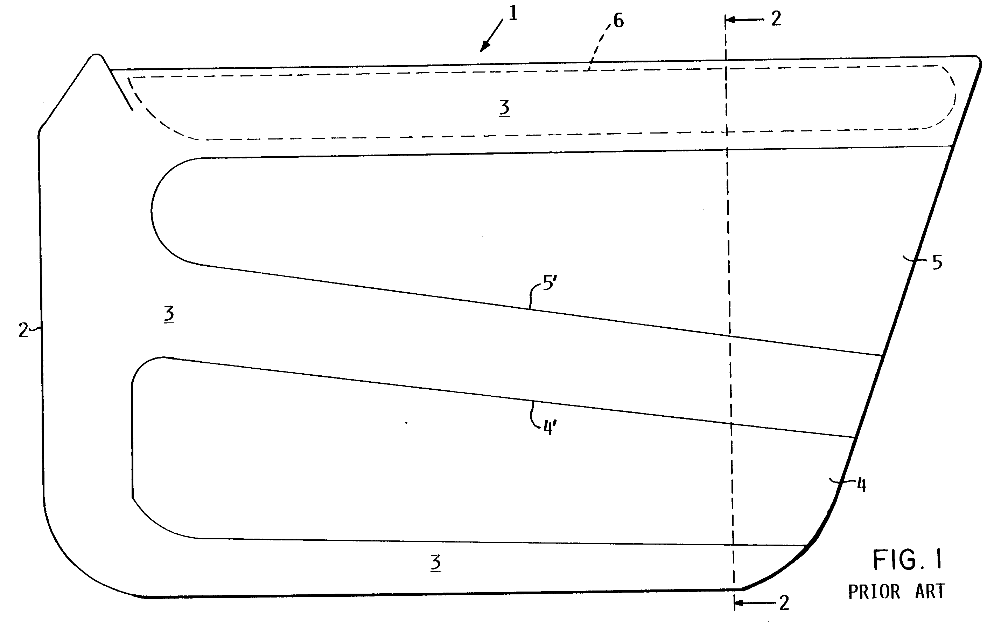

Referring first to Figs. 1, 2, and 3, these Figures relate to the prior art, whereby Figs. 1 and 2 relate to our earlier U. S. Patent 4,923,539 (Spengler et al.), and whereby Fig. 3 relates in substance to European Patent Publication 0,118,796 (Repper et al.).

Fig. 1 shows a front view of a door panel 1 having a backing 2 covered by a decorative cover sheet, such as a vinyl film 3. The panel is also decorated with two inserts 4 and 5 on top of the vinyl sheet 3 and a further insert 6 below the vinyl sheet 3. The problem with such door panels has been heretofore the proper formation of the finished insert rims 4' and 5'.

The sectional view of Fig. 2 along section line 2 - 2 in Fig. 1 shows the conventional formation of the panel rims. The cover sheet of the respective panel was either curved all the way around the backing or adhesive was needed to secure an insert in a recess of sufficient depth to hold the insert rims. The insert 4 has a backing 4A and a decorative cover 4B that is folded around onto the back surface as shown at 4C. Similarly, the vinyl cover sheet 3 is folded all the way around onto the back surface 2A of the backing 2 as shown at 3A. These folding operations are difficult to perform and additionally require adhesive to secure the rim portions 3A to the back surface 2A. The insert 5, for example of cloth 5A, is held in place in a recess 7 by adhesive 5B that may mar the cover 3, especially around the edges of the recess 7. The insert 4 is held in a recess 8, for example, by mounting rivets 9. The tucking operations at 4C must be completed before any attachments by the rivets 9. All these operations for the proper securing of the rims are rather labor intensive and hence expensive.

Fig. 3 illustrates a conventional way of securing insert rims in a groove. A panel 10 which is of relatively simple construction since it is not curved in space except for the grooves, has a backing 12 with grooves 13 covered by a vinyl film 11 that is also folded at 11A around the panel edges onto the back surface 12A of the backing 12. An insert 16 having its own backing 15 covered by a decorative surface cloth layer 15, is to be secured in the grooves 13. For this purpose, adhesive 17 is needed either on the inwardly facing surface of the insert 16, or on the outwardly facing surface of the cover sheet 11 at least in those areas where the insert is to be secured. In both instances there is a possibility of soiling the decorative surface of the cover film 11 as shown at 19 when the edges of the insert 16 are tucked into the grooves 13 by a tucking tool 18 that may be operated manually or by a molding apparatus. If the adhesive is applied to the cover film 11 where needed, it is practically unavoidable to use a masking to minimize the soiling of the decorative surface of the cover film 11. Both operations are cumbersome.

Fig. 4 illustrates a panel insert material 20 constructed of a two ply backing of a thermosplastic foam material 22 adhesively bonded to a thermoplastic fleece material 23 covered by a decorative layer 21 for example, of cloth or the like. The two backing plies 22 and 23 are made of a thermoplastic material such as ABS resins, polypropylene, or the like capable to bond to cover layer 21.

Fig. 5 shows an insert material 24 with a thermoplastic foam backing 26 and a decorative cover layer 25, for example of polyvinyl, without any fleece ply in the backing.

Fig. 6 shows the material of Fig. 5 molded as taught by the invention in a mold according to the invention. The trim panel 27 has a finished rim 28 where the thermoplastic foam backing 26 is densified by the application of heat and pressure. The densification is shown at 27A. No backfolding of cover 25 is needed.

Fig. 7 shows a mold according to the invention, suitable for forming the insert material 29 having a thermoplastic foam backing 31 and a decorative cover layer 30 between an upper mold 32 and a lower mold 33. For the present purposes the lower mold 33 is heated, for example, by an electrical heater 34 and the upper mold 32 is cooled by flowing a coolant through ducts 35 to protect cover 30. A molding force 36 is applied by a conventional drive such as a piston cylinder device or the like.

Fig. 8 shows a lower mold 37 with a cutting pad 38 inserted into a respective groove in alignment or in register with an edge 42 of an upper mold 41 and also in alignment with a cutting or trimming tool 43 for trimming the rim around the insert panel which again comprises a thermoplastic foam backing 40 covered by a cloth layer 40B, which is adhesively bonded to the densified foam material as shown at 40A. The densification and the molding of the finished rim takes place simultaneously with the adhesive bonding. The bonding is due to the curing of the foam material 40 as it is heated between the two mold tools 37 and 41. The lower mold tool 37 is heated by a heater 39 to temperatures within the range of about 180 to about 220°C, depending on the type of thermoplastic material used. The manufacturer of these materials usually provides the reuqired temperatures for plastifying. The upper tool 41 is cooled by passing a cooling liquid, for example water, through the cooling ducts 45, in order to protect the decorative cover layer 40B. The temperature of the upper tool 41 should be kept within the range of about 40°C to about 60°C for protecting the finished cover layer 40B. The material of the cutting pad 38 is, for example, a hard rubber or plastic material not hard enough to damage the cutting edge of the tool 43. The cutting tool 43 has its own drive 44 which is operable independently of the drive 36 of the upper mold 41. The present teaching makes it possible to perform any needed trimming cut from the front side of the finished panel resulting in a neat finished rim without any backfolding.

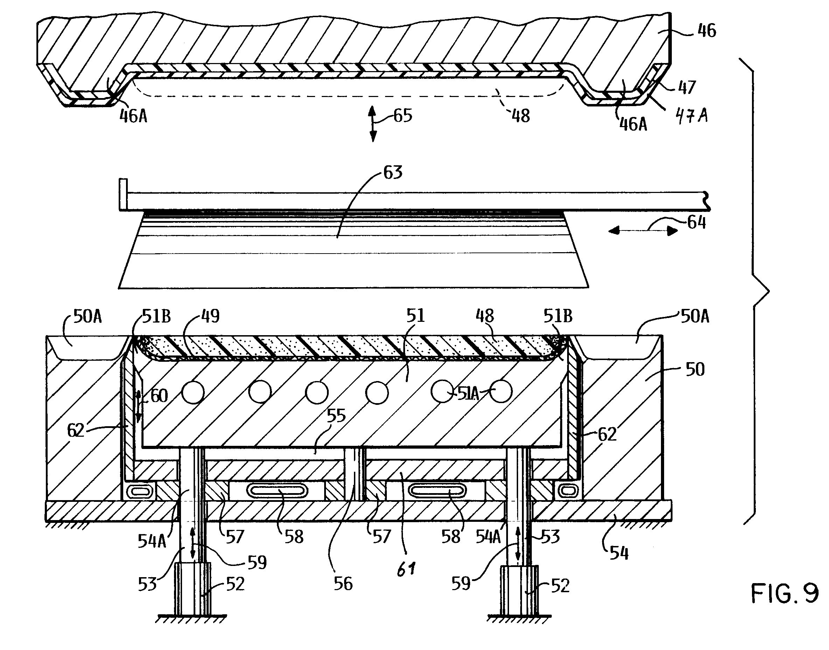

Fig. 9 shows a sectional view through a molding apparatus according to the invention, including a movable upper molding section 46 and a stationary lower molding section 50. The upper molding section 46 has two downwardly projecting mold portions 46A that fit into respective cavities 50A of the lower mold section 50. A door panel 47 is held in the upper mold section 46, for example by conventional suction devices not shown. A panel insert 48 is to be secured to the door panel 47 in the apparatus of Fig. 9. A drive mechanism symbolically shown as a double arrow 65 moves the upper mold section 46 up or down and applies the necessary molding pressure. The panel 47 is covered with a vinyl cover sheet 47A. The insert 48 is adhesively bonded to the cover sheet 47A.

A heater 63, for example, an infrared heater, is movable horizontally into the space between the open mold sections 46 and 50. A conventional drive 64 symbolically indicated by an arrow moves the heater 63 from a heating position as shown into a retracted position out of the way for permitting the closing of the mold sections 46 and 50. The heater 63 sufficiently heats the thermoplastic foam backing of the insert 48 held in a nesting die 51 received in a nesting die cavity 55 formed within a tucking or trimming tool having a base 61 and tools 62. The nesting die 51 has cooling ducts 51A for sufficiently cooling the nesting die 51 thereby to protect the decorative surface or cover layer of the insert 48. The nesting die 51 also has a curved rim 51B for molding or shaping and compressing or densifying the rim 49 of the insert 48. The outer surface of the mold rim 51B forms a guide for the tucking or trimming tools 62.

The lower mold section 50 rests on a platform 54 forming part of the machine frame. The trimming tool base 61 rests on spacers 57 on the platform 54 and is movable up and down in the direction of the arrow 60 by linear pneumatic drives 58 which are expanded by introducing air under pressure into these drives which are provided in the form of strong rubber hoses as is conventional. Thus, the application of the trimming or tucking force through the tools 62 is independent of the movement by the nesting die 51 which is guided by a guide bar 56 rigidly secured to the platform 54 and also guiding the movement of the tool base 61. The nesting die 51 is operated by its own drive means in the form of piston cylinder devices 52 having piston rods 53 passing through openings 54A in the platform 54 with a sliding fit.

Thus, the nesting die 51 is movable up and down as indicated by the arrows 59.

In operation, the nesting die 51 forms a third molding tool that is movable in the nesting cavity independently of the first or upper mold section 46 and independently of the second stationary mold section 50. Once the densification of the finished rim 49 of the insert 48 is completed, the linear pneumatic drives 48 are expanded and the tucking tools 64 press the finished rim 49 into position against the door panel 47 as shown in dashed lines in the upper portion of Fig. 9 for adhesive bonding.

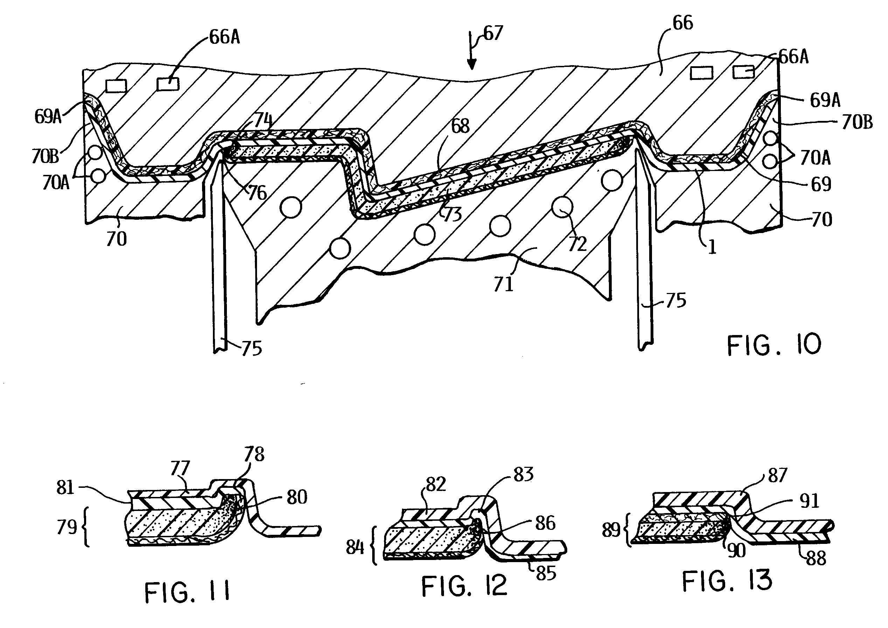

Fig. 10 illustrates the ability of the present invention to provide even door panels 69 having a complicated three-dimensional configuration curved in space, with finished rims as shown at 69A and also to provide such panels with an insert 73 which itself has finished rims 74. To form the finished rims 69A the upper mold section 66 independently driven by a drive 67, such as a piston cylinder device, is provided with electrical heaters 66A while the lower mold sections 70 are provided with cooling ducts 70A, especially in their rims 70B for forming the finished panel rims 69A. The insert panel 73 for covering a three-dimensionally curved portion 68 of the panel 69 is formed by a nesting die 71 provided with cooling ducts 72 similar as described above with reference to Fig. 9. Tucking tools 75 having a blunt working tip 76 are also operable as described above. The insert 73 and its finished rims 74 formed by a respective rim section of the nesting die 71, and the door panel 69 may be produced in a single operational sequence in one and the same molding tool.

The above described cooling ducts keep the finish material cover layer at a first temperature sufficiently low to avoid damage to the finish material of the cover layer. The heating elements, for example 66A in Fig. 10 on the other hand, heat the backing material sufficiently to deform and mold the heat responsive, thermoplastic material of the backing under pressure so that the respective molds can densify the edge zone of the trim panel and/or of the insert, thereby forming the contoured finished rim. The respectively shaped rims, for example, 70B of the mold sections cooperate in the compressing and molding of the panel or insert edge zone.

Figs. 11, 12, and 13 show, that the invention avoids the need for tucking an unfinished rim into a groove because the rim is already finished and any "tucking" done by the invention merely pushes the finished rim, which has a substantial rigidity, into the respective groove. In Fig. 11, the door panel 77 has a relatively flat wide groove 78 to which the insert 79 with its finished rim 80 is secured, for example, by an adhesive film 81 that can be cured by heat and/or pressure.

Fig. 12 shows the possibility of attaching a narrow finished rim 86 into a respective narrow groove 83 of a panel 82 having a cover layer 85. A friction fit is sufficient to hold the rigid rim 86 in place in its groove 83.

In Fig. 13 the panel 87 has a cover layer 88 and a recess 91 in which the insert panel 89 is received. The finished rim 90 may be held in place by an adhesive bonding. No soiling of the cover layer 88 is possible, because no tucking needs to be performed of an unfinished rim.

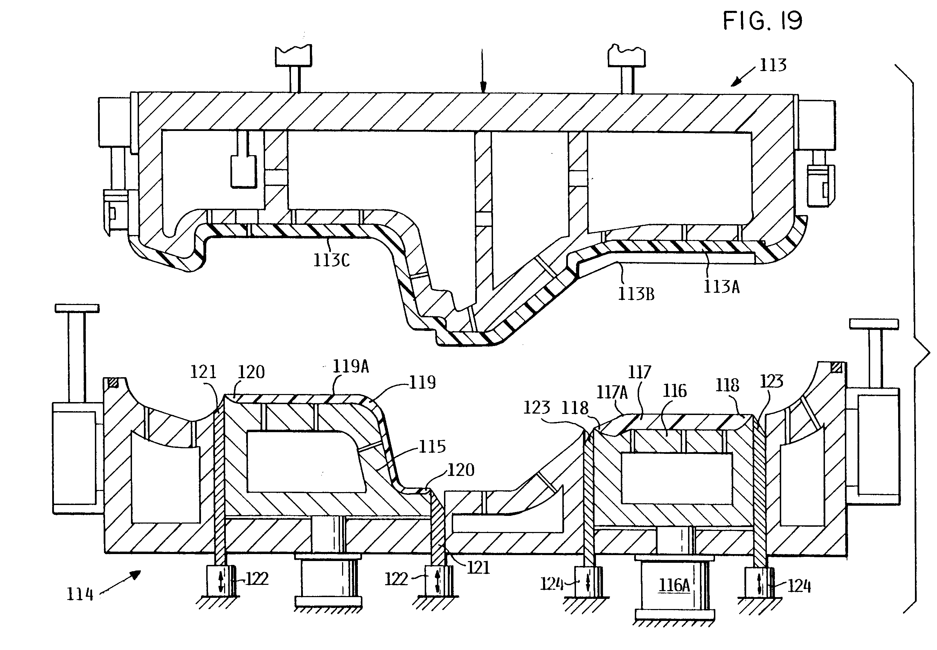

Fig. 14 shows a panel insert 92 with a thermoplastic foam backing 93 and a cloth cover layer 94 with a finished rim 95 that is densified and forms a rigid flange 95A around the insert 92.

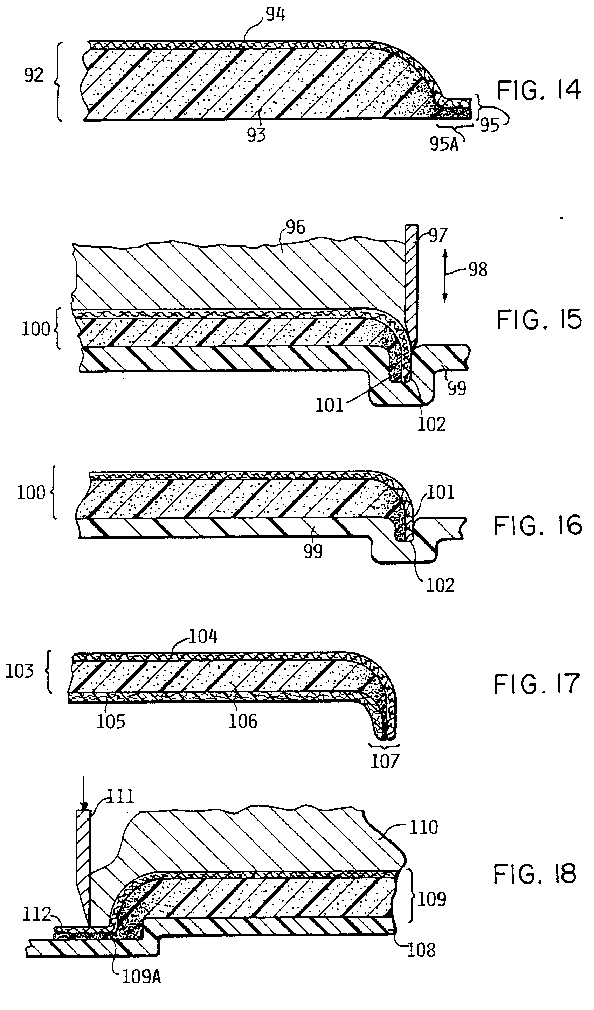

Fig. 15 shows an insert panel 100 inserted into a groove 102 of a panel 99, whereby the densified rigid insert rim extends at a 90° angle of the plane defined by the insert 100. An upper mold tool 96 assisted by a tucking tool 97 pushes the rigid densified rim 101 into the groove 102. The tucking tool 97 is operable by its own drive 98 to properly guide the rim 101 into the groove. Fig. 16 shows the result of the operation described above with reference to Fig. 15. The groove 102 may be relatively small since the rigid rim 101 will be properly held by a location fit.

Fig. 17 shows a panel 103 with a two ply backing including a foam backing 106 and a fleece backing 105, both of which are made of thermoplastic material and covered by a cloth cover layer 104, whereby the densified rim 107 includes the densified portion of the fleece 105 and the densified portion of the foam material.

Fig. 18 illustrates a backing 108 having secured thereto an insert panel 109 by means of a tool 110 and a trimming knife 111 for removing a waste portion 112 from the densified finished flange type rim 109A.

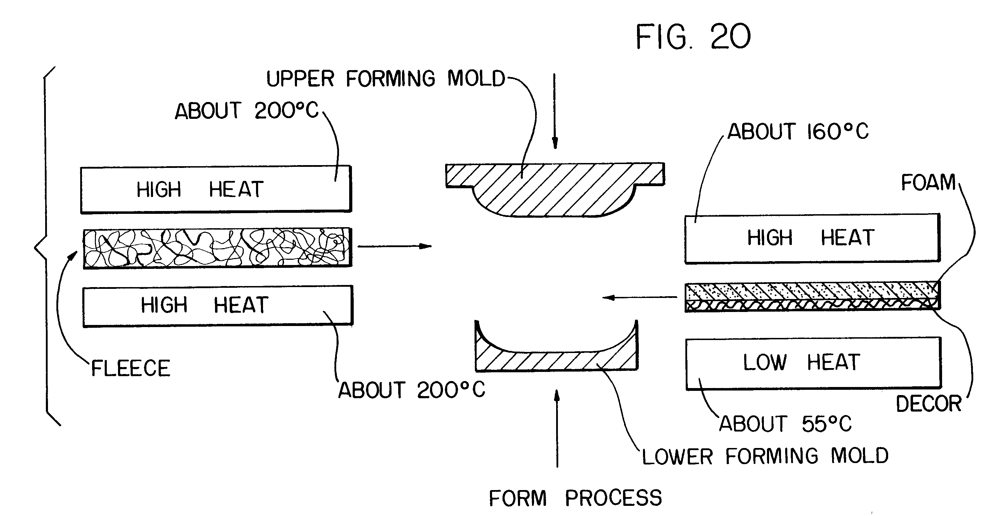

Fig. 19 is a sectional view through a molding tool according to the invention. The general construction is quite similar to that of Fig. 4 in our earlier U. S. Patent 4,923,539 (Spengler et al.). However, present Fig. 19 illustrates the mold modified according to the invention. The upper mold 113 holds a panel backing or substrate 113A, for example, by suction as is conventional. The lower mold 114 comprises two nesting dies 115 and 116 surrounded by trimming tools 121 and 123 respectively. The trimming tools 121 are driven by their own drive piston cylinder devices 122. Similarly, the trimming tools 123 are driven by their own piston cylinder drives 124. The nesting die 116 holds an insert 117 with finished rims 118. The nesting die 115 holds an insert 119 with finished rims 120. Both inserts 117 and 119 are provided with an adhesive 117A, 119A on the surface facing the substrate 113A. Thus, the insert 117 is adhesively bonded into the recess 113B of the substrate 113 by the nesting die 116 operated by its own drive 116A. The insert 119 is bonded to the surface area 113C of the substrate 113A. The edges of the tools 121, 123 may be blunt because these tools merely need to properly position the respective insert in or on the surface of the substrate 113A.

Fig. 20 shows a further embodiment of the present method for forming a laminate that in itself may form a finished vehicle door or the like. On the left-hand part of Fig. 20, a fleece, such as a thermoplastic or thermosetting fleece material, which itself is conventional, is separately heated so that it has a temperature just below its melting point. To the right side of Fig. 20, a laminate is formed of a foam material and of a cover layer that may be a decorative material. The latter is heated to a low temperature so as not to damage the cover layer, for example, to a temperature of 55°C, while the foam backing is heated to a higher temperature of about 160°C to form a first laminate.

The first laminate and the preheated fleece are then inserted into the mold sections so that the mold is sandwiched between the fleece and the cover layer. The foam material has a density sufficient for the transmitting of a molding pressure through the foam material to form the finished product.

It is important to heat the foam material just to such a temperature that its density will hardly be changed for the purpose of transmitting the molding pressure through the foam material to form the second laminate with the foam material sandwiched between the fleece forming a backing or substructure and the decor material on the opposite side of the backing.

Although the invention has been described with reference to specific example embodiments it will be appreciated that it is intended to cover all modifications and equivalents within the scope of the appended claims.

## Claims

1. An apparatus for producing a trim panel having a heat responsive material backing covered on one surface by a cover layer, said apparatus comprising a first molding tool and a second molding tool cooperating with said first molding tool for forming said trim panel simultaneously with a finished panel rim, said first molding tool comprising an edge curved toward said second molding tool for molding a margin of said trim panel into said finished panel rim, said first molding tool further comprising cooling means for cooling said cover layer of said trim panel to prevent damage to said cover layer, said second molding tool comprising heating means for heating said heat responsive material backing of said trim panel, whereby said curved edge of said first cooled molding tool molds said cover layer and said backing while said second molding tool heats said backing material to plastify said backing material at least along said panel margin for densifying and shaping said heat responsive material backing into said finished panel rim so that said cover layer curves around said margin of said material backing at least partly toward an opposite surface of said trim panel to form said finished panel rim as a densified panel rim.

2. The apparatus of claim 1, wherein said second molding tool comprises a cutting pad extending in alignment with said curved edge of said first molding tool, said apparatus further comprising cutting means surrounding at least a portion of said first molding tool in register with said cutting pad for cutting off excess panel material along said finished densified panel rim.

3. The apparatus of claim 2, further comprising first drive means for moving at least one of said first and second molding tools relative to the other molding tool, and second drive means for moving said cutting means independently of any movement of said first and second molding tools for cutting off excess material.

4. The apparatus of claim 1, further comprising a nesting third molding tool, a nesting cavity in one of said first and second molding tools, said third molding tool being movable in said nesting cavity independently of said first and second molding tools, said nesting cavity having a curved edge for forming a densified rim around a panel insert formed in said nesting cavity.

5. The apparatus of claim 4, further comprising second drive means for moving said nesting third molding tool in said nesting cavity relative to said first and second molding tools.

6. The apparatus of claim 4, further comprising tucking means surrounding said nesting third tool for tucking a rounded panel rim of a panel insert into a panel groove, and third drive means for operating said tucking means.

7. The apparatus of claim 6, wherein said tucking means have a blunt tucking tool edge.

8. The apparatus of claim 4, wherein said first molding tool, said second molding tool, and said nesting third molding tool form respective mold sections.

9. An apparatus for producing a trim panel with a finished panel rim, said trim panel having a finish material cover layer laminated to one surface of a heat responsive moldable backing material, comprising first means for keeping said finish material cover layer at a first temperature sufficiently low to avoid damage to said finish material of said cover layer, second means for heating said heat responsive material backing to a second temperature sufficient for deforming and molding said heat responsive material under pressure, and mold means for compressing and molding an edge zone of said trim panel, so that said backing material is densified in said edge zone by said heating and compressing into said finished panel rim.

10. The apparatus of claim 9, wherein said mold means comprise a first mold section including said first means in the form of ducts for circulating a cooling fluid through said first mold section and a second mold section for cooperation with said first mold section, said second mold section including said second means for heating said heat responsive moldable material, one of said first and second mold sections having a contoured rim for performing said compressing and molding of said edge zone.

11. A method for forming and securing a trim panel to a support comprising the following steps:
(a) heat laminating at least two plies including a decorative surface ply and a thermoplastic material ply to each other to form a decorative panel;
(b) molding said decorative panel to form a contoured, densified, finished panel rim having a higher density than the rest of the panel, and
(c) securing said contoured, densified, finished panel rim into a recess of said support.

12. The method of claim 11, wherein said decorative surface ply is selected from the group of fabric, vinyl, leather and leather imitations, and wherein said thermoplastic material ply is selected from the group consisting of polypropylene, polystyrene thermoplastic foam materials and thermoplastic fleece materials.

13. The method of claim 11, further comprising heating a first molding tool facing said thermoplastic material ply at least along its molding tool edges or rims to a first temperature for plastifying said thermoplastic material to permit densifying and shaping a finished rim along an edge zone of said trim panel, and simultaneously cooling a second molding tool facing said decorative surface ply to a second temperature sufficient for protecting said decorative surface ply against damage by heat from said first molding tool.

14. The method of claim 13, wherein said first temperature is within the range of about 180°C to about 220°C, and wherein said second temperature is within the range of about 14°C to about 60°C.

15. The method of claim 11, wherein said decorative surface ply is bonded to said thermoplastic material ply by performing said laminating with an uncured thermoplastic material and then curing said uncured thermoplastic material.

16. A method for forming a panel, comprising the following steps:
(a) preheating a fleece material to a temperature just below its melting point,
(b) separately heating and laminating a foam material and a cover layer to form a first laminate, and
(c) laminating in a mold the preheated fleece to said first laminate so that said foam is sandwiched between said fleece and said cover layer to form a second laminate as a finished product such as a car door.

17. The method of claim 16, wherein said fleece is a thermoplastic or thermosetting material and said foam material has a density sufficient for transmitting a molding pressure through said foam material.

18. The method of claim 16, wherein said fleece material is heated to about 200°C, said cover material to about 55°C, and said foam material to about 160°C.
